# EUROPEAN PATENT SPECIFICATION

(11) **EP 3 985 349 B1**
(45) Date of publication and mention of the grant of the patent: **07.06.2023**
(21) Application number: 20461571.0
(22) Date of filing: 15.10.2020
(51) Int. Cl.: G01B 15/02

(54) **DEVICE AND METHOD FOR MEASURING THICKNESS OF A DIELECTRIC LAYER ON A METAL SURFACE**
VORRICHTUNG UND VERFAHREN ZUR MESSUNG DER DICKE EINER DIELEKTRISCHEN SCHICHT AUF EINER METALLOBERFLÄCHE
DISPOSITIF ET PROCÉDÉ DE MESURE DE L'ÉPAISSEUR D'UNE COUCHE DIÉLECTRIQUE SUR UNE SURFACE MÉTALLIQUE

(43) Date of publication of application: 20.04.2022
(73) Proprietor: Instytut Wysokich Cisnien Polskiej Akademii Nauk, 01-142 Warszawa (PL)
(72) Inventor: MIKHNEV, Valeri, 02-384 Warszawa (PL); KNAP, Wojciech, 05-807 Podkowa Lesna (PL); SKOTNICKI, Tomasz, 02-786 Warszawa (PL)
(74) Representative: Bury, Marek

(56) References cited:
- EP-A1- 2 570 766
- EP-A1- 2 620 741
- US-A1- 2004 178 343
- US-A1- 2005 156 606

## Description

The invention concerns a device and method for measuring thickness of a dielectric layer on a metal surface especially for use with paint testing in automotive industry.

Measurement of a thickness of layer protecting a metal is required in a number of industries. In numerous applications, for sufficient protection of metal it is crucial to guarantee predefined minimal thickness of protective layer (paint) and its verification in measurement. It is the case in e.g. automotive industry. Also in the automotive industry differences in paint thickness are used as an indicator that a car participated in an accident. Measurement is difficult as surfaces of metal elements protected with films (layers) of paint or other protective films may have quite arbitrary shapes.

State of the art thickness gauges for paint or protective coatings on metal are represented mostly by magnetic and eddy-current devices. They require calibration for accurate measurements as they are sensitive to the magnetic permeability of steel (magnetic thickness gauges) and conductivity of metal (eddy-current devices). Their advantage is that they are not sensitive to dielectric properties of coating, thus one should not take care of type and properties of paint. So, the calibration set includes several polyethylene terephthalate (PET) films from 0.1 mm to 1-2 mm thick (this material is stable to compression), that are placed when necessary on the metal substrate to check accuracy of the device. The problem is that the clean metal of exactly the same type as in the tested object is not always accessible, e.g. when fully painted car is to be tested.

Microwave method can easily solve this problem as all metals at high frequencies are almost perfect mirrors with reflection coefficient close to 1. The difference arises mostly from roughness of metal surface rather than from difference of metal properties at high frequencies (but influence of metal roughness is a common problem for all types of thickness gauges).

Use of electromagnetic waves at microwave frequencies in thickness gauges to measure thickness is known in the art.

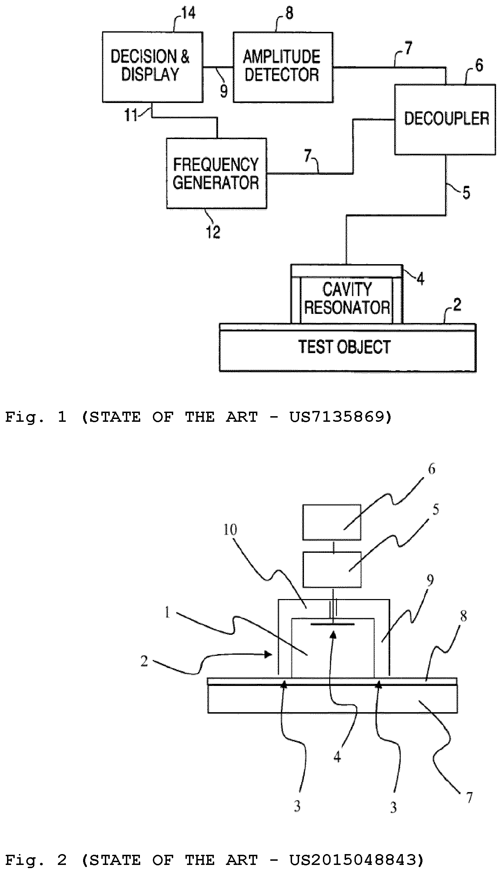

US patent no US7135869 entitled "Thickness measuring systems and methods using a cavity resonator" discloses a film thickness measurement systems and methods that utilize a signal generator and a resonant frequency detector to correlate the shift in resonant frequency experienced by a resonant cavity having one face abutting a test object - see Fig. 1. The shift in resonant frequency is determinative of a linear or near linear correlation between film thickness and the resonant frequency shift. Therefore, once device is calibrated it is possible to measure resonant frequency and map it to film thickness. Unfortunately, the operation of the device is not fully repeatable as there is non-zero electric field on the open end and consequently the device is susceptible to dielectric properties of the film. In the state of the art, the methods for reducing the dimension of the microwave cavity are known, e.g. from the patent application EP 2 570 766 A1, where it is achieved by filling said resonator with a dielectric material.

Additionally in car industry however the problem of thickness measurement is more complicated. In general reflection of electromagnetic (EM) wave from a dielectric layer depends on dielectric permittivity of material. Hence, the user would need to prepare a set of paint layers of different thicknesses to calibrate the microwave thickness meter. Great variety of paints in real life makes the problem very burdensome for user. If the coating is unknown or multilayered - as in case of car industry - the problem cannot be solved satisfactorily at all.

Above problems were partially solved in US patent no US6989675, entitled "Method and apparatus for precision measurement of film thickness". The patent discloses an apparatus for precision measurement of the thickness of a thin film comprising: a source of microwave energy, resonance control means, a microwave resonator unit operating on a resonance frequency and having a hollow cylindrical body with an open end on the side facing said thin film during measurement, a close end on the side opposite to said open end, and feeder, that linking means for linking said microwave resonator unit with said source of microwave energy and with said resonance control means. US6989675 discloses application of resonator with induced TE (transverse electric) mode. Thanks to using TE mode, the electric field at open end in presence of metal layer is suppressed to almost 0.

US patent application no US2015048843 discloses - see Fig. 2 - a device for measuring a thickness of a dielectric layer 8 on a base substrate 7, comprising a cylindrical resonant cavity 1 having a circular cylindrical wall 9 and a plane wall 10 on one end thereof, wherein the opposite end 3 is open to be placed upon the dielectric layer 8 on the substrate 7 to form a wall of the resonant cavity 1 on the opposite end 3. The device has an antenna 4 located within said resonant cavity 1 and adapted to excite an electromagnetic field in the resonant cavity 1 that is approximately zero in the dielectric layer 8. A reflection meter 5 is connected to said antenna 4 and adapted to measure the resonant frequency of the resonant cavity 1. Processor 6 is connected to said reflection meter 5 and adapted to determine the thickness of the dielectric layer 8 from the resonant frequency of the resonant cavity 1. The invention also relates to a method for measuring a thickness of a dielectric layer using said device. US2015048843 offers no other way to eliminate parasitic modes other than limiting bandwidth. Inventor noticed that this solution has two drawbacks: 1) limitation of bandwidth limits the scope of measurable thickness; 2) not all parasitic modes can be eliminated.

Additionally, use of resonators operating on higher-order modes such as TE₀₁ increases dimension of the device that needs to be applied to the surface under test. As car parts have rather arbitrary shapes, typically microwave resonators have diameters too large to be adequately applied in places where metal surface is not flat enough.

That is why microwave thickness gauges are not competitive with magnetic and eddy-current analogs and are not available nowadays in the market. Insensitivity to the properties of coating offered by magnetic and eddy-current devices is advantageous over insensitivity to metal offered by microwave analogs.

Sensitivity to varying dielectric properties and large dimensions of device applied are major disadvantages. It is an object of the invention to resolve them.

A device for measuring thickness of a dielectric layer on a metal surface, has an amplitude detector, a microwave generator and a cavity resonator with a first end electrically open and a second end coupled with the microwave generator and the amplitude detector. Said cavity resonator has a known reference resonant frequency and a control unit connected to said detector and generator to measure a resonant frequency and determine a thickness of the dielectric layer from a difference between the measured resonant frequency and the reference resonant frequency. The microwave generator operates at a central frequency greater than or equal to 10 GHz and is tunable in a relative frequency band greater than or equal to 1%, the cavity resonator is a circular resonator formed of a circular waveguide segment filled with a filling comprising a dielectric material having a permittivity greater than or equal to 3 and provided with a central opening, having a radius close to 0.05 the radius of the resonator. The microwave generator and the circular waveguide segment are coupled and configured to induce an electromagnetic wave in a transverse electric mode TE₀₁. Dielectric filling enables reduction of the sensor size and improves sensitivity. Central opening shifts away the resonance of parasitic mode TM₁₁.

Advantageously, the microwave generator is coupled to the circular waveguide segment via a feed for inducing an electromagnetic field in the circular waveguide segment while the amplitude detector is coupled with the circular waveguide segment with a separate probe for sampling said field.

Advantageously the feed and the probe are wire loops connected to cores of concentric cables protruding through the closed end.

Advantageously the device is provided with an excitation system coupled to the closed end of the circular waveguide segment and it further has a coupler. The excitation system is connected to a first port of the coupler having a second port connected to the microwave generator and a third port connected to the amplitude detector wherein the second port and the third port of the coupler are isolated by at least 6 dB of coupler isolation.

The microwave generator advantageously operates at the frequency greater than or equal to 23 GHz. Generally the higher frequency the lower dimensions of the waveguide can be. Higher frequencies like 60 or 80 GHz are also applicable. Advantage of these bands is that emissions therein are allowable and unlikely to disturb operation of crucial systems. However, at higher frequencies maximal range of measurement might be diminished.

Advantageously the central opening is blind.

Alternatively the central opening is filled with a dielectric having lower permittivity than the filling of the circular waveguide segment.

Advantageously the filling has also circumferential opening.

A method of determining a thickness of a dielectric layer on a metal surface, by applying open end of a circular waveguide segment having a second end closed and having a known reference frequency, including a step of applying said circular waveguide segment to the dielectric layer of the metal surface applying signal and measuring resonant frequency, and a step of determining a thickness of the dielectric layer from a difference between the measured resonant frequency and the reference frequency, according to the invention is distinguished in that the open waveguide segment is circular waveguide segment and it is coupled with a microwave generator having a frequency greater than or equal to 10 GHz so that an electromagnetic wave of a transverse electric mode TE₀₁ is induced and in that the waveguide is filled with dielectric material having permittivity of at least 3 with a central opening having a radius close to 0.05 the radius of the resonator.

Advantageously the reference resonant frequency is greater than or equal to 23 GHz and measurements are taken at the frequency greater than or equal to 23 GHz in a frequency band wider than or equal to 20.

The invention has been described below in detail, with reference to the following figures:
Fig. 1 showing a block diagram of state of the art microwave thickness measurement system;
Fig. 2 showing schematically another state of the art microwave thickness measurement system;
Fig. 3 showing schematically measurement system according to the invention;
Fig. 4a and 4b showing electric field distributions for the modes TE₀₁ and TM₁₁ in the cross section of circular waveguide in a device according to the invention;
Fig. 5 showing relation of phase versus thickness for layers of different dielectric permittivity,
Fig. 6 showing relation between thickness and resonant frequency for different filling materials,
Fig. 7 showing another embodiment of the invention.

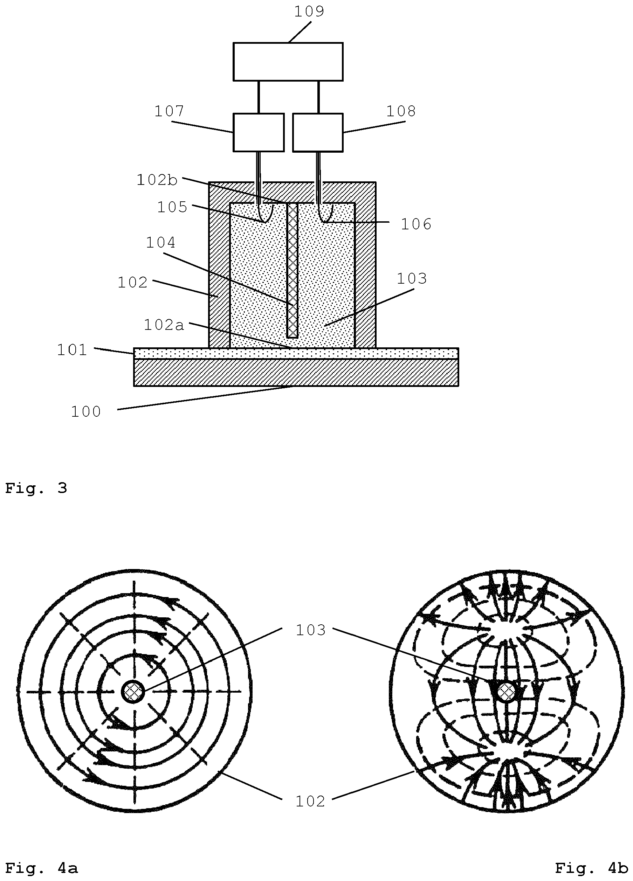

An example of realization of the device according to the invention is presented schematically in Fig. 3. The device is used for evaluation of thickness of a dielectric layer **101** on a metal surface **100.**

The device has an amplitude detector **108** and a microwave generator **107** coupled to cavity resonator formed of circular waveguide segment **102.** Circular waveguide segment has a first end **102a** electrically open for applying to layer under test and second end **102b** that is electrically closed. The second end **102b** is closed with a metal plate having two openings for feed **105** and probe **106.** The feed **105** and probe **106** are wire loops connected to cores of TEM lines - concentric cables protruding through the closed second end **102b** and leading to microwave generator **107** and amplitude detector **108** respectively.

The feed **105** couples the second end **102b** with microwave generator **107** and thus is used to induce electromagnetic field in the circular waveguide segment **102.**

The probe **106** couples the second end **102b** with the amplitude detector **108** and thus is used to assess amplitude of the field in the circular waveguide segment **102** and consequently to determine resonant frequency when the generator **107** is swept. The generator **107** and detector **108** are both connected to control unit **109.** Use of control unit makes it easier to process results and communicate with user.

The generator **107** operates at frequency of a least 23 GHz and is tunable in relative frequency band of wider than or equal to 1%.

The generator **107** and circular waveguide segment **102** and feed **105** are configured to induce predominantly mode TE₀₁. Waveguide segment is filled with low-loss dielectric filling - in this embodiment - alumina having permittivity of 9.6. Tests and simulations show that low-loss dielectric filling **103** improves sensitivity. Especially fillings having permittivity above 3 and losses corresponding to tgδ lower than 0.005 proved to be suitable. Use of dielectric having tgδ = 0.001÷0.002 is even better. E.g. quartz filing having permittivity ε=3.8. Alumina having permittivity ε=9.6 is even better. The diameter and height of the waveguide segment need to correspond to TE₀₁ mode resonance at given frequency.

The central frequency of at least 23 GHz allows using circular waveguide segment of diameter of 10 mm and height 10 mm or lower.

Dielectric filling **103** is provided with central opening **104.** It results in drop of permittivity in the central part of the circular waveguide segment **102.** It has very limited or no effect on mode TE₀₁. Electric field of mode TE₀₁ in a cross section of the circular waveguide segment **102** is shown in Fig. 4a. It is not the case for a mode TM₁₁ - distribution of electric field across circular waveguide segment **102** for this mode is shown in Fig. 4b.

As the mode TE₀₁ and parasitic mode TM₁₁ which is sensitive to dielectric permittivity of the coating have the same cut-off wavelength equal to 1.64 of inner radius of the circular waveguide segment **102** (*λ_{cutoff}* = 1.64·*R*), mode TE₀₁ is degenerated with mode TM₁₁, and thus both of them have the same resonance frequency in the homogeneous resonator. This phenomenon contributes to limited precision of measurement. The opening **104** makes the resonator electrically shorter for mode TMn, and thus its parasitic resonance shifts away from the resonance of mode TE₀₁. This improves the measurement accuracy but does not entail limitation of frequency band.

Opening **104** is filled with air and preferably is blind at the first end **102a** to prevent dirt from entering. Alternatively it can be filled with dielectric material having lower permittivity than filling **103.** However, if the opening is filled with dielectric rather than air, its diameter should be made larger to move the resonance of parasitic mode TM₁₁. Larger diameter is undesirable as it disturbs also mode TE₀₁.

The radius of opening **104** *r* should be selected as a trade-off between small disturbance of the mode TE₀₁ and strong disturbance of parasitic mode TM₁₁.

Typically, good results are obtained if height *w* and radius *r* of the opening **104** are close to 0.05 R where R is the radius of resonator.

Similar approach may be applied to different parasitic modes and more openings can be used.

Opening **104** preferably is blind on the first end **102a** of circular waveguide segment **102.** That prevents dirt from getting inside. Alternatively it can be filled with a material having permittivity lower than 2.

Frequency band in which generator **107** is swept, contributes to maximal detectable resonance frequency shift and hence to maximal measurable thickness. Relative band of 1% is enough in most cases of automotive measurement. 2% is even better. Broadening the bandwidth above 5% has no or very little use.

Generator **107** and amplitude detector **108** can be coupled with circular waveguide segment **102** with single excitation system e.g. loop. In such configuration additional coupler is required. Generator **107** and detector **108** are connected to isolated ports. Transmission configuration however offers easier calibration and a better dynamic range.

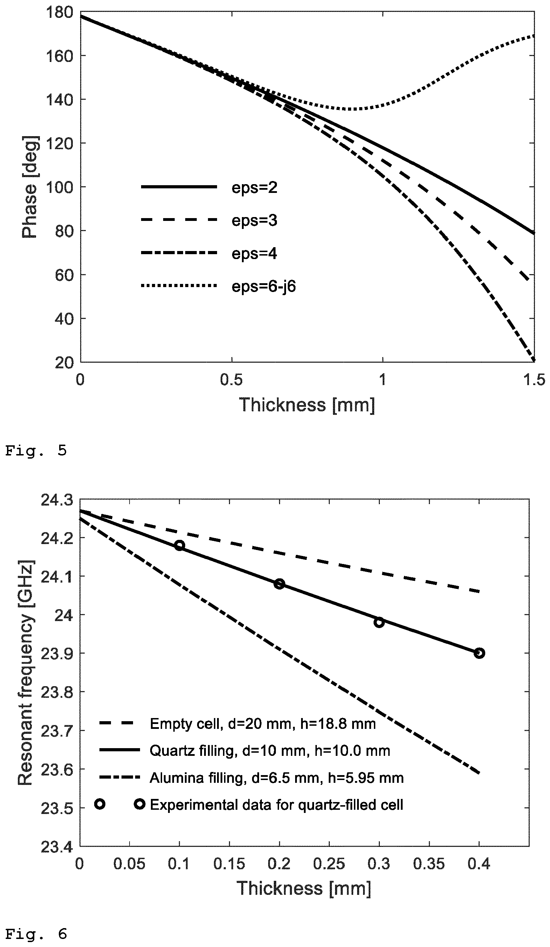

Method according to the invention is based on the use of TE₀₁ mode that simplifies calibration and eliminates error related to mapping shift of resonance frequency to layer **101** thickness. Said layer can in fact be multilayered structure. As long as thickness of layer is lower than 0.5 mm and the layer is substantially dielectric the properties of said layer other than thickness do not matter. It is shown in Fig. 5 illustrating results of calculation of phase of a reflected wave versus thickness of different layers. Results correspond to 24 GHz, yet within a range of frequencies the phase changes in linear manner with change of frequency.

In exemplary embodiment device according to the invention is used. The device is first calibrated by applying - abutting open end of the waveguide **102** it to flat metal surface with no layers. Resonant frequency is determined by sweeping the generator **107** and measuring the amplitude with amplitude detector **108.** Resonant frequency is the one corresponding to maximal amplitude. However, any method of measuring resonant frequency would suit. Measured resonant frequency is stored as resonant frequency.

Second measurement is made on the surface with layer 0.5 mm thick. That allows to determine parameters of the linear relation between thickness and resonant frequency. Alternatively, multiple layers can be measured to improve accuracy and reduce error. Also lookup table can be constructed in measurements or simulations.

In measurements the first end **102a** of the circular waveguide segment **102** is applied to the surface under test - metal surface **100** coated with dielectric layer **101.**

Resonant frequency is measured again. The difference between measured resonant frequency and reference resonant frequency is used to determine the thickness of the layer **101** according to linear relation parameters or lookup table.

Fig. 6 shows relation between resonant frequency and thickness for different materials of filling **103.** The quartz-filled waveguide segment with diameter d=10 mm and height h=10.0 mm had been fabricated and tested using vector network analyzer Keysight N5242B.

Experimental data obtained for a set of PET films placed on steel substrate are also plotted in Fig. 6. One can conclude from Fig. 6 that dielectric filling of the waveguide segment that constitutes resonator reduces required diameter. Furthermore as relation between the resonant frequency and thickness is steeper for materials with higher permittivity, dielectric filling increases sensitivity of the sensor to the thickness of dielectric coatings of metals.

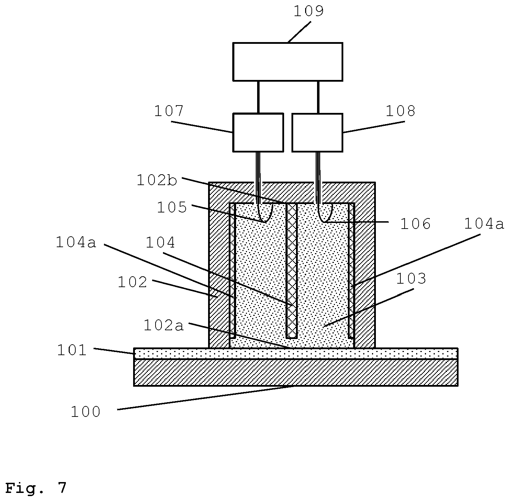

Electric field of TE₀₁ tends to zero both in the center and also on the waveguide walls. This is not the case for mode TM₁₁. Accordingly, better attenuation of TM₁₁ parasitic mode can be obtained with dielectric filling **103** having circumferential opening **104a** shown in Fig. 7. Mechanism of suppressing mode TM₁₁ is the same, but the effect is stronger.

Further parasitic modes can be attenuated if additional openings corresponding to maximums of electric field distribution of those modes are applied.

Although above examples were focused on 24 GHz, the invention can be realized also at higher frequencies eg. 60 or 80 GHz, with proper scaling of dimensions. However, the range of measurement is altered as it is limited by maximal thickness up to which measurement is permittivity-independent.

It is also possible to use 10 GHz operating frequency but providing convenient resonator dimensions would then impose requirements on permittivity that are difficult to meet. The invention have been developed for use with automotive industry, however it can be successfully applied in other industries in which metals are protected with substantially dielectric layers.

## Claims

1. A device for measuring thickness of a dielectric layer **(101)** on a metal surface **(100),** having an amplitude detector **(108),** a microwave generator **(107)** and a cavity resonator with a first end **(102a)** electrically open and a second end (**102b**) coupled to the microwave generator **(107)** and the amplitude detector **(108),** said cavity resonator having a known reference resonant frequency and a control unit connected to said detector and generator to measure a resonant frequency and determine a thickness of the dielectric layer from a difference between the measured resonant frequency and the reference resonant frequency wherein the microwave generator **(107)** operates at a central frequency greater than or equal to 10 GHz and is tunable in a relative frequency band of at least 1%, the cavity resonator is a circular resonator formed of a circular waveguide segment **(102)** filled with a filling **(103)** comprising a dielectric material having a permittivity of at least 3 and provided with a central opening **(104)** having a radius close to 0.05 the radius of the resonator, wherein the microwave generator **(107)** and the circular waveguide segment **(102)** are coupled and configured to induce an electromagnetic wave in a transverse electric mode TE₀₁.

2. Device according to claim 1, **characterized in that** the microwave generator **(107)** is coupled to the circular waveguide segment **(102)** via a feed **(105)** for inducing an electromagnetic field in the circular waveguide segment **(102)** while the amplitude detector **(108)** is coupled with the circular waveguide segment **(102)** with a separate probe **(106)** for sampling said field.

3. Device according to claim 2, **characterized in that** the feed **(105)** and the probe **(106)** are wire loops connected to cores of concentric cables protruding through the closed second end **(102b).**

4. Device according to claim 1 characterized that it is provided with an excitation system for coupling the microwave generator **(107)** with the second end **(102b)** of the circular waveguide segment **(102)** and it further has a coupler, wherein the excitation system is connected to a first port of the coupler having a second port connected to the microwave generator **(107)** and a third port connected to the amplitude detector **(108)** wherein the second port and the third port of the coupler are isolated by at least 6 dB of coupler isolation.

5. Device according to any of claims 1 to 4, **characterized in that** the microwave generator **(107)** operates at the frequency of a least 23 GHz.

6. Device according to any of claims 1 to 5, **characterized in that** the central opening **(104)** is blind.

7. Device according to any of claims 1 to 5, **characterized in that** the central opening **(104)** is filled with a dielectric having lower permittivity than the filling **(103)** of the circular waveguide segment **(102).**

8. Device according to any of claim 1 to 7, **characterized in that** the filling **(103)** has also a circumferential opening (**104a**).

9. A method of determining a thickness of a dielectric layer **(101)** on a metal surface **(100),** by applying an open end **(102a)** of a circular waveguide segment **(102)** having a second end **(102b)** closed and having a known reference resonant frequency, including
a step of applying said circular waveguide segment **(102)** to the dielectric layer **(101)** of the metal surface **(100)** applying signal and measuring resonant frequency, and
a step of determining a thickness of the dielectric layer **(101)** from a difference between the measured resonant frequency and the reference resonant frequency,
wherein
the circular waveguide segment **(102)** is coupled with a microwave generator **(107)** having a frequency of at least 10 GHz so that an electromagnetic wave of a transverse electric mode TE₀₁ is induced and in that the waveguide segment is filled with dielectric material having permittivity of greater than or equal to 3 with a central opening **(104)** having a radius close to 0.05 the radius of the resonator.

10. A method according to claim 9, **characterized in that** the reference resonant frequency is greater than or equal to 23 GHz and measurements are taken at a central frequency greater than or equal to 23 GHz in a relative frequency band greater than or equal to 20.

## Patentansprüche

1. Vorrichtung zum Messen der Dicke einer dielektrischen Schicht **(101)** auf einer Metalloberfläche **(100),** mit einem Amplitudendetektor **(108),** einem Mikrowellengenerator **(107)** und einem Hohlraumresonator mit einem ersten Ende **(102a),** das elektrisch offen ist, und einem zweiten Ende **(102b),** das mit dem Mikrowellengenerator **(107)** und dem Amplitudendetektor **(108)** gekoppelt ist, wobei der Hohlraumresonator eine bekannte Referenzresonanzfrequenz und eine Steuereinheit aufweist, die mit dem Detektor und dem Generator verbunden ist, um eine Resonanzfrequenz zu messen und eine Dicke der dielektrischen Schicht aus einer Differenz zwischen der gemessenen Resonanzfrequenz und der Referenzresonanzfrequenz zu bestimmen, wobei der Mikrowellengenerator **(107)** bei einer Mittenfrequenz größer oder gleich 10 GHz arbeitet und in einem relativen Frequenzband von mindestens 1 % abstimmbar ist, wobei der Hohlraumresonator ein kreisförmiger Resonator ist, der aus einem kreisförmigen Wellenleitersegment **(102)** gebildet ist, das mit einer Füllung **(103)** gefüllt ist, die ein dielektrisches Material mit einer Permittivität von mindestens 3 umfasst und mit einer zentralen Öffnung **(104)** mit einem Radius nahe 0,05 des Radius des Resonators versehen ist, wobei der Mikrowellengenerator **(107)** und das kreisförmige Wellenleitersegment **(102)** gekoppelt und konfiguriert sind, um eine elektromagnetische Welle in einem transversalen elektrischen Modus TE₀₁ zu induzieren.

2. Vorrichtung nach Anspruch 1, **dadurch gekennzeichnet, dass** der Mikrowellengenerator **(107)** mit dem kreisförmigen Wellenleitersegment **(102)** über eine Zuführung **(105)** zum Induzieren eines elektromagnetischen Felds im kreisförmigen Wellenleitersegment **(102)** gekoppelt ist, während der Amplitudendetektor **(108)** mit dem kreisförmigen Wellenleitersegment **(102)** mit einer separaten Sonde **(106)** zum Abtasten des Felds gekoppelt ist.

3. Vorrichtung nach Anspruch 2, **dadurch gekennzeichnet, dass** die Zuführung **(105)** und die Sonde **(106)** Drahtschleifen sind, die mit Kernen konzentrischer Kabel verbunden sind, die durch das geschlossene zweite Ende **(102b)** vorstehen.

4. Vorrichtung nach Anspruch 1, **dadurch gekennzeichnet, dass** sie mit einem Anregungssystem zum Koppeln des Mikrowellengenerators **(107)** mit dem zweiten Ende (102b) des kreisförmigen Wellenleitersegments **(102)** versehen ist, und sie ferner einen Koppler aufweist, wobei das Anregungssystem mit einem ersten Anschluss des Kopplers verbunden ist, der einen zweiten Anschluss, der mit dem Mikrowellengenerator **(107)** verbunden ist, und einen dritten Anschluss, der mit dem Amplitudendetektor **(108)** verbunden ist, aufweist, wobei der zweite Anschluss und der dritte Anschluss des Kopplers durch mindestens 6 dB Kopplerisolierung isoliert sind.

5. Vorrichtung nach einem der Ansprüche 1 bis 4, **dadurch gekennzeichnet, dass** der Mikrowellengenerator **(107)** bei der Frequenz von mindestens 23 GHz arbeitet.

6. Vorrichtung nach einem der Ansprüche 1 bis 5, **dadurch gekennzeichnet, dass** die zentrale Öffnung **(104)** verdeckt ist.

7. Vorrichtung nach einem der Ansprüche 1 bis 5, **dadurch gekennzeichnet, dass** die zentrale Öffnung **(104)** mit einem Dielektrikum gefüllt ist, das eine niedrigere Permittivität als die Füllung **(103)** des kreisförmigen Wellenleitersegments **(102)** aufweist.

8. Vorrichtung nach einem der Ansprüche 1 bis 7, **dadurch gekennzeichnet, dass** die Füllung **(103)** auch eine Umfangsöffnung (**104a**) aufweist.

9. Verfahren zum Bestimmen einer Dicke einer dielektrischen Schicht **(101)** auf einer Metalloberfläche **(100)** durch Anlegen eines offenen Endes **(102a)** eines kreisförmigen Wellenleitersegments **(102),** das ein zweites Ende **(102b),** das geschlossen ist, und eine bekannte Referenzresonanzfrequenz aufweist, mit
einem Schritt des Anlegens des kreisförmigen Wellenleitersegments**(102)**
an die dielektrische Schicht **(101)**der Metalloberfläche **(100)** unter Anlegen eines Signals und Messen einer Resonanzfrequenz, und
einem Schritt des Bestimmens einer Dicke der dielektrischen Schicht
**(101)** aus einer Differenz zwischen der gemessenen Resonanzfrequenz und der Referenzresonanzfrequenz,
wobei
das kreisförmige Wellenleitersegment **(102)** mit einem Mikrowellengenerator **(107)** gekoppelt ist, der eine Frequenz von mindestens 10 GHz aufweist, so dass eine elektromagnetische Welle eines transversalen elektrischen Modus TE₀₁induziert wird, und wobei das Wellenleitersegment mit dielektrischem Material gefüllt ist, das eine Permittivität von größer als oder gleich 3 aufweist, und mit einer zentralen Öffnung **(104)** versehen ist, die einen Radius nahe 0,05 des Radius des Resonators aufweist.

10. Verfahren nach Anspruch 9, **dadurch gekennzeichnet, dass** die Referenzresonanzfrequenz größer als oder gleich 23 GHz ist, und Messungen bei einer Mittenfrequenz größer oder gleich 23 GHz in einem relativen Frequenzband größer oder gleich 2 % vorgenommen werden.

## Revendications

1. Dispositif permettant de mesurer l'épaisseur d'une couche diélectrique **(101)** sur une surface métallique **(100),** présentant un détecteur d'amplitude **(108),** un générateur de micro-ondes **(107)** et un résonateur à cavité avec une première extrémité **(102a)** électriquement ouverte et une seconde extrémité **(102b)** couplée au générateur de micro-ondes **(107)** et au détecteur d'amplitude **(108),** ledit résonateur à cavité présentant une fréquence de résonance de référence connue et une unité de commande connectée audit détecteur et générateur afin de mesurer une fréquence de résonance et de déterminer une épaisseur de la couche diélectrique à partir d'une différence entre la fréquence de résonance mesurée et la fréquence de résonance de référence dans lequel le générateur de micro-ondes **(107)** fonctionne à une fréquence centrale supérieure ou égale à 10 GHz et est réglable dans une bande de fréquence relative d'au moins 1 %, le résonateur à cavité est un résonateur circulaire formé d'un segment de guide d'onde circulaire **(102)** rempli d'un remplissage **(103)** comprenant un matériau diélectrique présentant une permittivité d'au moins 3 et doté d'une ouverture centrale **(104)** présentant un rayon proche de 0,05 fois le rayon du résonateur, dans lequel le générateur de micro-ondes **(107)** et le segment de guide d'onde circulaire **(102)** sont couplés et configurés afin d'induire une onde électromagnétique dans un mode électrique transversal TE₀₁.

2. Dispositif selon la revendication 1, **caractérisé en ce que** le générateur de micro-ondes **(107)** est couplé au segment de guide d'onde circulaire **(102)** par le biais d'une alimentation **(105)** afin d'induire un champ électromagnétique dans le segment de guide d'onde circulaire **(102)** tandis que le détecteur d'amplitude **(108)** est couplé au segment de guide d'onde circulaire **(102)** avec une sonde séparée **(106)** afin d'échantillonner ledit champ.

3. Dispositif selon la revendication 2, **caractérisé en ce que** l'alimentation **(105)** et la sonde **(106)** sont des boucles métalliques raccordées à des noyaux de câbles concentriques saillant à travers la seconde extrémité fermée **(102b).**

4. Dispositif selon la revendication 1, **caractérisé en ce qu'**il est doté d'un système d'excitation permettant de coupler le générateur à micro-ondes **(107)** avec la seconde extrémité **(102b)** du segment de guide d'onde circulaire **(102)** et il présente en outre un coupleur, dans lequel le système d'excitation est connecté à un premier orifice du coupleur, présentant un deuxième orifice connecté au générateur de micro-ondes **(107)** et un troisième orifice connecté au détecteur d'amplitude **(108),** dans lequel le deuxième orifice et le troisième orifice du coupleur sont isolés d'au moins 6 dB de l'isolation du coupleur.

5. Dispositif selon l'une quelconque des revendications 1 à 4, **caractérisé en ce que** le générateur de micro-ondes **(107)** fonctionne à la fréquence d'au moins 23 GHz.

6. Dispositif selon l'une quelconque des revendications 1 à 5, **caractérisé en ce que** l'ouverture centrale **(104)** est borgne.

7. Dispositif selon l'une quelconque des revendications 1 à 5, **caractérisé en ce que** l'ouverture centrale **(104)** est remplie d'un matériau diélectrique présentant une permittivité inférieure au remplissage **(103)** du segment de guide d'onde circulaire **(102).**

8. Dispositif selon l'une quelconque des revendications 1 à 7, **caractérisé en ce que** le remplissage **(103)** présente également une ouverture circonférentielle **(104a).**

9. Procédé de détermination d'une épaisseur d'une couche diélectrique **(101)** sur une surface métallique **(100),** en appliquant une extrémité ouverte **(102a)** d'un segment de guide d'onde circulaire **(102)** présentant une seconde extrémité **(102b)** fermée et présentant une fréquence de résonance de référence connue, incluant:
une étape consistant à appliquer ledit segment de guide d'onde circulaire **(102)**
à la couche diélectrique **(101)** de la surface métallique **(100),** à appliquer un signal et à mesurer la fréquence de résonance, et
une étape consistant à déterminer une épaisseur de la couche diélectrique
**(101)** à partir d'une différence entre la fréquence de résonance mesurée et la fréquence de résonance de référence,
dans
lequel le segment de guide d'onde circulaire **(102)** est couplé à un générateur de micro-ondes **(107)** présentant une fréquence d'au moins 10 GHz de sorte qu'une onde électromagnétique d'un mode électrique transversal TE₀₁ soit induite et le segment de guide d'onde est rempli de matériau diélectrique présentant une permittivité supérieure ou égale à 3 avec une ouverture centrale **(104)** présentant un rayon proche de 0,05 fois le rayon du résonateur.

10. Procédé selon la revendication 9, **caractérisé en ce que** la fréquence de résonance de référence est supérieure ou égale à 23 GHz et des mesures sont prises à une fréquence centrale supérieure ou égale à 23 GHz dans une bande de fréquence relative supérieure ou égale à 2 %.
